# EUROPEAN PATENT SPECIFICATION

(11) **EP 0 989 947 B1**
(45) Date of publication and mention of the grant of the patent: **17.03.2004**
(21) Application number: 96924696.6
(22) Date of filing: 24.07.1996
(51) Int. Cl.: B65G 1/00

(54) **Accumulator**
Speichervorrichtung
Unité de stockage

(30) Priority: 24.07.1995 US 1377
(43) Date of publication of application: 05.04.2000
(73) Proprietor: Quest Diagnostics Incorporated, Teterboro, NJ 07608 (US)
(72) Inventor: VOTE, Andrew, Sean, Arlington, MA 02174 (US); CHRISTOPHER, Anthony, J., Handover, MA 01810 (US); DEVENNEY, Thomas, W., Brownmill, NJ 08015 (US); SAGONA, Peter, J., Pottstown, PA 19465 (US); VAN DYKE, Bingham, H., Jr., Gilbertsville, PA 19525 (US); O'BRYAN, David, P., Kennett Square, PA 19348 (US)
(74) Representative: Viering, Hans-Martin, Dipl.-Ing.
(86) International application number: PCT/US1996/012256
(87) International publication number: WO 1997/003902

(56) References cited:
- EP-A- 0 619 493
- FR-A- 2 303 738
- US-A- 3 556 279
- US-A- 5 159 960
- US-A- 5 336 063
- US-A- 5 337 880
- US-A- 5 400 894
- US-A- 5 489 016
- US-A- 5 529 165
- US-A- 5 623 415

## Description

This invention relates to an apparatus for loading onto and unloading from and adjacent conveyor system certain round devices being transported by the conveyor system. This device provides a means for loading the conveyor system and for off-loading devices from the conveyor. In the off-load mode, the apparatus can be uses as a means for delaying reentry of the devices back onto the conveyor system, or the devices can be removed from further interaction with the conveyor system or recycled or recharged for a subsequent trip through the conveyor system.

A conveyor systems providing for directing samples to multiple sites has been developed as described in co-pending application USSN 08/390463 filed 16 February 1995, published with document US-A-5 623 415. That application, to the extend required for understanding and using this invention, is incorporated herein by reference. That device uses a so called puck as a means for holding tubes which contain a biological sample which needs to be routed to different stations positioned on a set of spurs attached to a backbone conveyor which serves as a loading and routing apparatus. That device mentions a loading means for loading and unloading said containers from the conveyor portion of the apparatus. This invention provides one means for effecting that loading and unloading function.

US-A-3 556 279 discloses a transporting apparatus for transporting articles from a conveyor, comprising a holding area having a guide wall which is divided into a gate wall and one wall before and behind the gate wall, a floor which is movable on rollers, a baffle at the exit of the holding area, a rotatable wheel, and a curved fence for spanning the full breath of the conveyor, wherein the walls are fixed to the movable floor.

EP-A-0 619 493 describes a sample sorting apparatus comprising a conveyor system having a wheel for conveying devices.

The purpose for this invention is to provide an accumulator device to accumulate for loading or unloading round carriers from a conveyor system. These functions can be carried out singly or in combination if so desired.

According to the invention, this is achieved by an accumulator according to the features of claim 1. Advantageous further embodiments are described in the subclaims.

The invention will now be described by way of example only,

Round devices, biological specimen carriers as described below or any other round carrier, or solid or hollow device, bottle, can, etc. which can be rotated and routed over a conveyor system can be utilized in this invention. Preferably the round device will have a flat or essentially flat bottom surface. Also the bottom surface of this device will be some material which will stick to the moveable surface enough so that the device is carried along the axis of travel of the surface, yet will not stick to that surface so tightly that it can not slide on that surface when it contacts a baffle or a rotating wheel mechanism. This can be controlled by selecting materials for both the movable floor and the round device which allow for some friction between the two surfaces, but also allow for side movement as well in a manner which does not require great amounts of force. Selection of such materials is within the state of the art. A plastic or metal bottom on the device is preferred, particularly a metal bottom.

One example of a round device which can benefit from this invention is a device for holding and transporting tubes which contain biological specimens and which need to be routed over a conveyor system to an analytical device situated along the conveyor. More specifically such a round device would be characterized as a holder suitable for holding vials in a generally upright orientation for transport on a conveyor line and comprising: a body having a cavity therein open at an upwardly facing side of the body, the cavity being of suitable size and shape to receive the lower part of a vial inserted therein, the cavity having bottom and side surfaces, characterized in that extending into the cavity from the side surfaces are one or more resilient members, extending into the cavity to a distance sufficient to exert by their resilience a grip upon a vial inserted into the cavity. This device necessarily will have a flat bottom as it must be capable of being transported by a flat conveyor belt.

In practice the round device will be placed on the movable surface which is circumscribed by at least a three walls sized proportionally to that of the round device so as to prevent it from falling out of the enclosure as it moves with the operation of the apparatus. Preferably the apparatus will have at least three walls, two on either side of the direction of travel of the movable surface and one separating the movable surface from the conveyor system. The fourth side of the movable surface can be left open, can be fitted with a fourth wall or can be made to interface with another device for handling round devices. The walls will not be anchored to the movable surface but attached to a framework which is constructed in stand-alone form or attached to the conveyor frame in some fashion. The framework of this accumulator can also be constructed on the skeleton of a table and be made detachable so that it can be moved to different locations on a conveyor system.

As for the movable surface, it will be flat and preferably it will be essentially horizontal. The movable surface will be made to travel in a manner which causes the round device to come in contact with one or more baffles and by force of friction between bottom of the device, that of the movable surface and the baffle, the device will follow the angle or arc of the baffle toward an opening in the bed of the apparatus which is juxtaposed with the side of the conveyor system. This movable surface will preferably be a continuous belt of some kind which is compatible with the bottom surface material of the device. The floor can be made to be reversible. Standard conveyor belt material can be used. A rigid plate could also be used where weight, or other unique requirements, will not permit the use of flexible porous plastic/fibrous materials. A closed loop belt system is preferred because of the opportunity it provides for continuous functionality and compactness.

The movement of the surface can be toward the conveyor system, parallel to the conveyor system, or at some angle to the conveyor system. The direction of movement will be determined by the choice of placement of the baffle and the need for having a loading, unloading or holding function. The preferred direction of movement is either that of a 90 orientation to the conveyor or that it will move parallel to the operation of the conveyor.

As regards the rate of travel of the movable floor, this will depend on a specific system and how fast loading and unloading needs to be done. That rate can be readily determined by a skilled artisan. It is expected that a speed of 1 to 10 feet per minute will be adequate to satisfy the requirements of most load and unload operations. This figure however does not preclude the use of this device in operations which require higher speeds. It is expected that the rate limiting step here will be the speed of the conveyor system rather than the speed at which the movable floor can be operated. Preferably the speed of the floor will be essentially the same as that of the transport mechanism on the conveyor device.

Baffles are used to direct the flow of devices toward an egress point within the pen created by the walls surrounding the movable floor, or baffles are used to affect the residence time of a device when the apparatus is used as a delay device, or when unloading devices, to direct devices to a particular location on the movable floor. One or more baffles can be used. They can be placed in any desired configuration over the floor. They can have a linear construction or be curved, or a combination have a combination of curved and linear features. If more than one baffle is used, each baffle may have the same construction or have different features, i.e., both can be linear or one can be linear and the other can be curved. Where the apparatus is used for both onloading and off-loading, it may have a gate-like mechanism associates with one section of a baffle to prevent the egress of devices past that point of the baffle, for example an alleyway.

Baffles may be constructed of any rigid material which will withstand the pressure of devices being pushed against it by the moving floor. Metal is preferred. Baffles will be suspended above the movable floor. This can be accomplished by fastening one or more ends of a baffle to a wall surrounding the floor. Alternatively a baffle could be suspended from a superstructure constructed over the pen. There are myriad other ways in which this engineering feat could be accomplished as will be apparent to those skilled in the art.

Each apparatus will have at least one opening in the wall which abuts the conveyor system and which communicates with the transport mechanism of the conveyor. This opening will be constructed in a manner which creates a narrow alley just wide enough for a single device to pass through it. On one side will be situated a rotatable wheel which overlaps the proximal edge of the transport mechanism by an amount sufficient to contact the device and, alone or in combination with a wall opposite, urge it onto or off of the transport mechanism. The opposing wall is passive. It will be attached to the wall of the conveyor guide opposite the wheel and will form an arc across the transport mechanism, and terminate at a point above the surface of the movable floor. This wall or guiderail will be placed at a distance from the wheel which is essentially equal to or a bit wider than the diameter of the device which must pass through the alleyway. Normally one end of a baffle will communicate directly with this static wall. In some instances where a second baffle is used, the second baffle will have its terminus placed adjacent to the rotatable wheel. Otherwise the proximal wall surrounding the pen will serve terminate adjacent to the moving surface of the wheel.

Some means is needed to insure the device will make the transition across the floor/transport interface. The rotatable wheel serves this purpose. It will be motorized. It will have a rigid core. The outer edge may be smooth, or roughened, or have projecting fingers which fit around a device, or have a concave surface which essentially mirrors the convex surface of the round device; this list is not intended to be exhaustive. The wheel will interact with the device in a way which insures that the device will be moved by the wheel's outer edge between the floor and transport or vica versa. To accomplish this, the wheel must contact the device and, either by means of fingers or a concave surface or frictional means, and actively move the device along a curved path scribed by the passive wall situated opposite the wheel. It is preferred to use a metal plate with a groove and in that groove a rubberized O ring. This type of mechanism provides the means for contacting the round device and by turning it on its axis, rotate it from the active transport mechanism of one apparatus to the other.

A wheel will be placed adjacent to the transport mechanism of the conveyor so that its outer edge will come in contact with a device passing along on the conveyor, whilst it also spans the gap between the apparati, and overlaps with the moveable floor. In the case of a wheel which has a pressure sensitive outer surface or one which works solely on friction, the clearance between the wheel's outer edge and the opposing wall must be some small increment less that that of the diameter of the device which will allow the wheel to contact the device, rotate it against the opposing wall and thereby effect its transition from one apparatus to the other. If a system of fingers or concave gear-like design is used, then the requirement for squeezing and rotating the device is not so critical. It is preferred to use the squeeze-and-rotate method.

One can combine the functions described above with a means for identifying a carrier or its content. Using that kind of technology with a discrete baffle construction, one can create a holding pen for delaying the transport of devices at some point on a conveyor system. For example devices can be diverted by a gate on the conveyor system to a queue feeding the accumulator (the rotatable wheel mechanism). A bar code reader will read the label on the device and enter it into a table along with the time of entry. After a delay the carrier will exit the accumulator onto the transport system. Upon exit, the specimen label bar code will again be read, the exit time entered into the table and the delay calculated. If the calculated delay is equal to or greater than the minimum, a message would be sent to computational device that the specimen has left the accumulator. The specimen carrier will then enter the cell exit gate, where its label will be read and sent to computer. It is assumed that if the specimen ID does not have a message from the accumulator confirming a stay at the accumulator, computer will reroute the specimen back to the accumulator.

The invention will now be further described. An accumulator intended primarily for loading devices onto a conveyor system comprises a conveyor belt which moves from top to bottom, having four walls which are discontinuous at two points, one at the bottom and the other at the top lefthand corner, and a set of three triangular baffles for diverting and mixing devices prior to their reaching the exit point, a rotatable wheel which is set opposite to a fixed wall which is placed somewhat further away from the wheel than the circumference of the devices, where said wheel moves devices onto the transport mechanism of the conveyor; a separate wheel located outside the pen serves as a means for diverting devices from the transport along an independent conveyor to a point at the top where the device is forced to migrate onto the conveyor belt of the accumulator and is directed into the center of the conveyor belt by baffle.

In a second accumulator, pulley, driven by a pulley fitted on post, is fitted with a standard conveyor belt and surrounded by four walls; wherein rotating wheels which are driven by electrical motors are placed at opposite ends of the pen circumscribed by walls and baffle which integrates with a passive wall on the left and right, the right-hand side being for loading devices onto conveyor transport device and the left hand wheel/wall combination being for unloading devices from conveyor transport device; gate which is statically or actively controlled, directing devices to the right of the baffle way from the recycling alley on the left, but allowing for passage of devices from wheel back onto belt, wherein said belt can be run in either direction.

Electrical motor is connected to a drive belt by pulley which is attached to cylinders which carry conveyor belt which can travel in either direction; electrical motor being connected to a switch which controls the position of gate, electrical motor being directly connected to rotatable wheel which interfaces with conveyor line which is supported by post which supports projection on which rests the proximal end of the accumulator framework, being supported at the distal end by post.

An accumulator has two baffles which are anchored to the side and back wall and the wall nearest the conveyor respectively, wherein conveyor belt which runs off of drum can move left to right or right to left in relation to the conveyor, and wherein wheel off-loads device form conveyor which device then travels left to right around baffle, moves into the channel created by the positioning of baffles, contacts baffle and moves into contact with wheel and thus back out onto conveyor.

Motor is connected by pulley to a belt which is connected to drum and provides bi-directional drive to belt which runs around a distal drum.

Cover is used to protect devices with open sample vials whilst they are being held on belt, rotatable wheel being driven by electrical motor, the proximal side of the apparatus being supported by lip which is attached directly to the superstructure of the conveyor system.

## Claims

1. An accumulator suitable for loading or unloading round devices from a conveyor system, comprising
a holding area for being situated in close proximity to the conveyor system, said holding area comprising
at least three walls,
a movable floor surrounded by said walls and being movable relative to said walls for carrying along the round devices in the direction of travel of the movable floor, and
at least one baffle suspended above the movable floor to direct the flow of said round devices into a predetermined location by moving said movable floor relative to the baffle;
at least one rotatable wheel for transition of the round devices across the floor and spanning a portion of said carrier section of the conveyor system sufficient to contact said round devices on the carrier section of the conveyor system in a manner which permits rotating said round devices against a fixed guide rail; and
a curved fence opposite said wheel for spanning the full breadth of a carrier section of the conveyor system, said guide rail extending into the holding area and having a curvature which parallels that of said rotatable wheel and being situated from said rotatable wheel at a distance.

2. The accumulator according to claim 1, wherein said movable floor is a continuous belt.

3. The accumulator according to claim 1 or 2, wherein the direction of movement of said movable floor is reversible.

4. The accumulator according to any of claims 1 to 3, wherein the rotatable wheel overlaps with the movable floor.

## Patentansprüche

1. Speichervorrichtung, die zum Beladen oder Entladen runder Vorrichtungen von einem Fördersystem geeignet ist, aufweisend:
einen Haltebereich, der in enge Nähe zu dem Fördersystem zu bringen ist, wobei der Haltebereich aufweist
wenigstens drei Wände,
einen bewegbaren Boden, der von den Wänden umgeben ist und relativ zu den Wänden für den Transport zusammen mit den runden Vorrichtungen in die Bewegungsrichtung des bewegbaren Bodens bewegbar ist, und
wenigstens ein Ablenkblech, das über dem bewegbaren Boden aufgehängt ist, um den Durchlauf der runden Vorrichtungen durch Bewegen des bewegbaren Bodens relativ zu dem Ablenkblech auf eine vorbestimmte Stelle zu richten;
wenigstens ein drehbares Rad für den Übergang der runden Vorrichtungen über den Boden und zum ausreichenden Überspannen eines Teils des Transportabschnitts des Fördersystems, um die runden Vorrichtungen an dem Transportabschnitt des Fördersystems in einer Weise zu kontaktieren, welche ein Drehen der runden Vorrichtungen gegen eine feststehende Führungsschiene erlaubt; und
eine gekrümmte Einfassung gegenüberliegend dem Rad zum Überspannen der ganzen Breite eines Transportabschnitts des Fördersystems, wobei sich die Führungsschiene in den Haltebereich hinein erstreckt und eine Krümmung aufweist, welche der des drehbaren Rades entspricht und sich in einem Abstand von dem drehbaren Rad befindet.

2. Speichervorrichtung gemäß Anspruch 1, wobei der bewegbare Boden ein fortlaufender Riemen ist.

3. Speichervorrichtung gemäß Anspruch 1 oder 2, wobei die Bewegungsrichtung des bewegbaren Bodens umkehrbar ist.

4. Speichervorrichtung gemäß einem der Ansprüche 1 bis 3, wobei das drehbare Rad mit dem bewegbaren Boden überlappt.

## Revendications

1. Unité de stockage appropriée au chargement ou au déchargement de dispositifs ronds à partir d'un système de manutention, comprenant :
une aire d'attente afin de se trouver dans le voisinage immédiat du système de manutention, ladite aire d'attente comprenant :
au moins trois parois,
un sol mobile entouré desdites parois et étant mobile par rapport audites parois afin d'entraîner les dispositifs ronds dans le sens d'utilisation du sol mobile, et
au moins un déflecteur suspendu au-dessus du sol mobile afin de diriger le flux desdits dispositifs ronds dans un emplacement prédéterminé en déplaçant ledit sol mobile par rapport au déflecteur ;
au moins une roue orientable pour la transition des dispositifs ronds de l'autre côté du sol et pour étendre une partie de ladite section transporteuse du système de manutention suffisamment pour mettre en contact lesdits dispositifs ronds avec la section transporteuse du système de manutention de manière à permettre la rotation desdits dispositifs ronds sur un rail de guidage fixe ; et
un rail de guidage incurvé opposé à ladite roue afin d'étendre la largeur complète d'une section transporteuse du système de manutention, ledit rail de guidage se prolongeant dans l'aire d'attente et ayant une courbure parallèle à celle de ladite roue rotative et se trouvant à distance de ladite roue rotative.

2. Unité de stockage selon la revendication 1, dans laquelle ledit sol mobile est un tapis sans fin.

3. Unité de stockage selon la revendication 1 ou 2, dans laquelle le sens du déplacement dudit sol mobile est réversible.

4. Unité de stockage selon l'une quelconque des revendications 1 à 3, dans laquelle la roue rotative chevauche le sol mobile.
